# EUROPEAN PATENT APPLICATION

(11) **EP 2 192 541 A1**
(43) Date of publication of application: **02.06.2010**
(21) Application number: 08020851.5
(22) Date of filing: 01.12.2008
(51) Int. Cl.: G06Q 30/00

(54) **Multimedia data transmission and feedback system for integrating performance evaluations**

(71) Applicant: Huveur Technologies Ins., Taichung City 40360 (TW)
(72) Inventor: Tung, Ning, Taiping City Taichung County 411 (TW); Fothergill-Zittrer, Nicholas David, Toronto, Ontario M4M-2Z4 (CA)
(74) Representative: Strehl Schübel-Hopf & Partner

(57) **Abstract**

A multimedia data transmission and feedback system for integrating performance evaluations includes a server 2 provided for an advertising owner 1 to browse the performance of each advertising site 4 before the advertising takes place. After the advertising owner 1 reviews the advertising information, the advertising site 4 and advertising device 41 are evaluated and selected by an analysis module 23 and a fee calculation module 24, and the advertising content is stored in a database 21 at the server 2. A middle server 3 transmits the advertising playing time and the ID code of the advertising device 41 to the advertising device 41 by the URL. At the playing time, the advertising device 41 is connected to the advertising content of the database 21 for instant play on the advertising device 41 , and works together with a view counter 42 for counting and analyzing the data of browser, and transmits the performance analysis information of the advertising to the advertising owner 1.

## Description

### BACKGROUND OF THE INVENTION

### Field of the Invention

The present invention relates to a multimedia data transmission and feedback system for integrating performance evaluations, and more particularly to a system using a middle server as a bridge for transmitting advertising information among a server, a database and an advertising device.

### Description of the Related Art

Traditional advertising of a product is generally provided in newspapers, magazines, televisions and similar media, in hope of having more people to view the advertising and promote the sales volume of the product.

However, the aforementioned advertising method has existing issues, such as the consumer group targeted by the advertising media including newspaper, magazine and television viewed or read by the consumers varies, and thus there is a difference between the consumer group and the advertising media, and the advertising effect is insignificant. To make up the deficiency of the insignificant advertising effect, advertising owners usually extend the advertising period or purchase more unsuitable media time to improve the aforementioned situation. As a result, a drastic higher advertising cost is incurred, but such advertising method without aiming at the target still has a very limited effect on the advertising performance.

In another advertising method, an advertising television wall is built at an office building, a station or other public places. When an advertising is played at such advertising television wall, the desired content of the advertising is stored in a storage device such as a video tape, a CD, a DVD or a computer hard disk, and the advertising content is played repeatedly until the advertising time purchased by the advertising owners ends. This method selectively plays the advertising content according to a specific time, a specific consumer groups or any other specific condition.

Obviously, the aforementioned method still has many problems. For instance, the film of the advertising content is changed at different sites manually, and the information on the advertising performance or the result of having viewers cannot be determined. In other words, such advertising method cannot provide a way for advertising owners to determine and evaluate whether or not the advertising performance.

In another advertising method, an advertising device is controlled by a remote end to download a desired advertising content directly through a network or the Internet. In this method, a high-capacity hard disk (or any other similar memory storage device) is installed in the advertising screen for storing audio/video files, pictures, music or other similar audio/video forms of the advertising content.

In general, the audio/video files of this sort occupy more memory spaces, and the capacity of these files is increased substantially with an improved quality of audio/video files, since the advertising owners always expect to have immediate effects. As a result, the capacity of hard disk (or any other similar memory storage device) installed in the advertising screen no longer meets the requirement. To solve this problem, users usually prepare additional high-capacity hard disks in advance for urgent needs, and thus the equipment cost will be increased, but the actual advertising performance remains to be seen.

For instance, if an advertising company has 100 advertising screens at each advertising site, then the company has to purchase at least 100 hard disks. Furthermore, some of these 100 advertising screens may be more popular than the others or have higher playing rate depending on the advertising owner's personal preference and the popularity of the screens at particular sites, and thus more hard disks will be purchased for such popular sites, but the rate of usage of the hard disks at non-popular sites will be very low.

Overall speaking, if there are 30 advertising screens with a low playing rate, it will require at least 30 hard disks to meet the basic configuration requirement. However, most of the hard disks at the non-popular sites have a low storage and playing rate and are situated at an idle condition. Furthermore, maintenance personnel have to visit a particular site for the maintenance, repair or replacement of a failed hard disk, and thus it is very inconvenient.

The prior art incurs a high cost of corporate equipments and even causes a waste of resources. Obviously, the prior art requires improvements.

### Summary of the Invention

Therefore, it is a primary objective of the present invention to overcome the foregoing shortcomings of the prior art by providing a multimedia data transmission and feedback system for integrating performance evaluations, and the system pre-stores an advertising content in a database at a server and uses a middle server to link the server and an advertising device at an advertising site, such that the advertising device and the server can be connected during an advertising playing time, and the system also stores an instant play into the advertising content of the database to overcome the high cost of installing a hard disk for each advertising device while maintaining the advantages of the instant play.

Another objective of the present invention is to allow advertising owners to post advertising on the Internet and evaluate the advertising performance in advance.

A further objective of the present invention is to provide performance analysis information after an advertising content is played, and allow the advertising owners to know about the actual performance of the advertising.

To achieve the foregoing objectives, the present invention provides a multimedia data transmission and feedback system for integrating performance evaluations, wherein an advertising owner posts advertising over the Internet, and the system comprises a server, a middle server and a plurality of advertising sites, and each advertising site has an advertising device with an identification (ID) code, and the foregoing components are connected with each other via the Internet.

The server comprises an operating interface provided for the advertising owner to operate and input an advertising parameter condition, a database for storing an advertising performance information of each advertising device, an analysis module for analyzing the advertising parameter condition to obtain the advertising performance information of the advertising device that satisfies the advertising parameter condition, and a fee calculation module for calculating an advertising fee corresponding to the advertising performance information, wherein the advertising owner selects the desired advertising site, the advertising device and at least one advertising playing time according to the obtained advertising performance information, and uploads the desired advertising content to the database, and the server assigns a URL to the uploaded advertising content.

The middle server receives the ID code of the advertising device, the advertising playing time and the URL information transmitted from the server, and transmits the selected advertising playing time and URL information to the advertising device according to the ID code of the advertising device.

The advertising device is connected to the database according to the received URL when the advertising playing time is up, and instantly plays the advertising content, and the advertising device includes a view counter for determining and recording a viewer count data which is the number of persons viewing the advertising content, and the advertising device transmits the viewer count data to the middle server and then to the server, and updates the advertising performance information of the advertising device at each advertising site and stores the updated advertising performance information into the database, after the advertising performance is analyzed by the analysis module.

### BRIEF DESCRIPTION OF THE DRAWINGS

FIG. 1 is a schematic view of a system layout in accordance with a preferred embodiment of the present invention;
FIG. 2 is a schematic view of an operating interface at a pull-down menu mode in accordance with a preferred embodiment of the present invention;
FIG. 3 is a schematic view of an operating interface at an map display mode in accordance with a preferred embodiment of the present invention;
FIG. 4 is a schematic view of a view counter being an infrared thermal sensing unit in accordance with a preferred embodiment of the present invention;
FIG. 5 is a schematic view of a view counter being a facial recognition unit in accordance with a preferred embodiment of the present invention;
FIG. 6 is a schematic view of a view counter being a press detection unit (or a trigger unit) in accordance with a preferred embodiment of the present invention; and
FIG. 7 is a schematic view of an advertising device installed in an elevator for sensing the condition of opening or shutting an elevator door or the up or down movement of the elevator for playing an advertising content in accordance with the present invention.

### DETAILED DESCRIPTION OF THE PREFERRED EMBODIMENTS

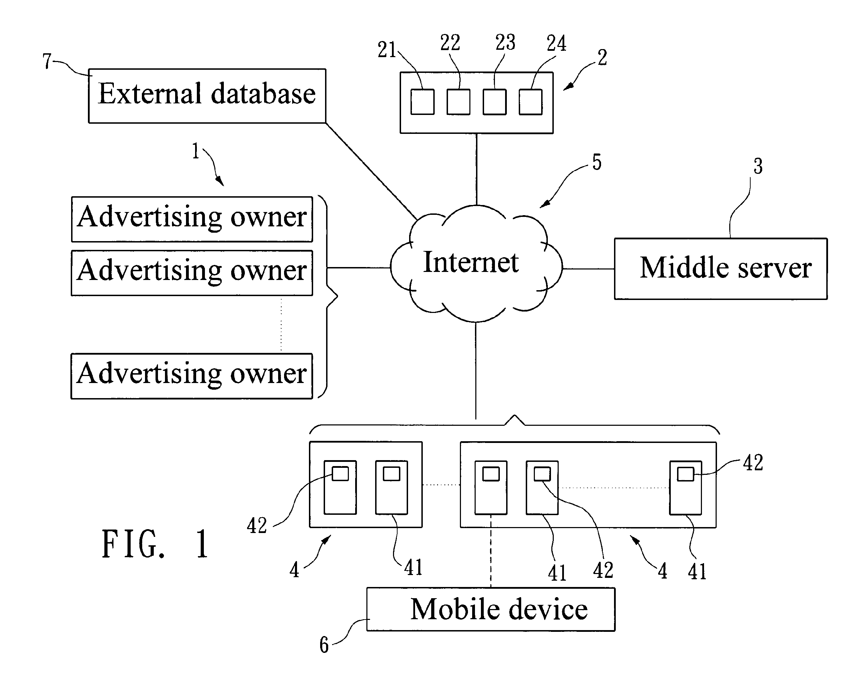

With reference to FIGS. 1 to 7 for the preferred embodiments of the present invention, the embodiments are provided for the purpose of illustrating the technical characteristics of the invention only, but not intended for limiting the scope of claims of the invention.

In FIG. 1, the multimedia data transmission and feedback system for integrating performance evaluations in accordance with the present invention is provided for an advertising owner 1 to post a desired advertising via the Internet from a remote end, and the system comprises a server 2, a middle server 3 and a plurality of advertising sites 4. In this embodiment, the advertising site 4 is an office building, a community building, a railway station, a subway station, a road intersection, a hospital, a cinema, an elevator, a bus station or a public transportation means, or any other public place or specific place such as an exhibition center that requires specific advertising.

Each advertising site 4 includes at least one advertising device 41 with an identification (ID) code, and the advertising device 41 of this embodiment includes a display unit (or a screen) 410 for displaying an advertising content, an information processing unit (or a central processing unit, CPU), a low-capacity information buffer unit and a network interface unit (and these components are not shown in the figure).

The server 2, the middle server 3 and the advertising device 41 at the advertising site 4 are connected with each other via the Internet 5 for transmitting signals, wherein the server 2 includes a database 21, an operating interface 22, an analysis module 23 and a fee calculation module 24, and the operating interface 22 is in the form of a webpage adopting the Web 2.0 technology for implementing the group marketing, and the "Long Tail" theory is used for servicing more small companies and achieving a better and more extensive sales and marketing effect.

The operating interface 22 is provided for the advertising owner 1 to operate and input an advertising parameter condition such as the type of products, the group of target consumers (including student, woman, elderly, working group and labor worker, etc), and possible advertising playing time. The database 21 is provided for storing advertising performance information of each advertising device 41, and after the statistics of advertising performance information of the advertising device 41 at each advertising site 4 are calculated for a period of time, the advertising performance or information of existing products at a particular site including the information of the type of products, the increase of sales volume or the number of persons passing through the advertising site 4 corresponding to the advertising device 41 of the advertising site 4 are provided for the analysis module 23 to analyze the advertising parameter condition and obtain an advertising site 4 that satisfies the parameter condition of the advertising owner 1 and the advertising performance information of the advertising device 41. The fee calculation module 24 is provided for calculating the advertising fee corresponding to the obtained advertising performance information and provided for the advertising owner 1 to determine whether or not the advertising fee matches an advertising budget.

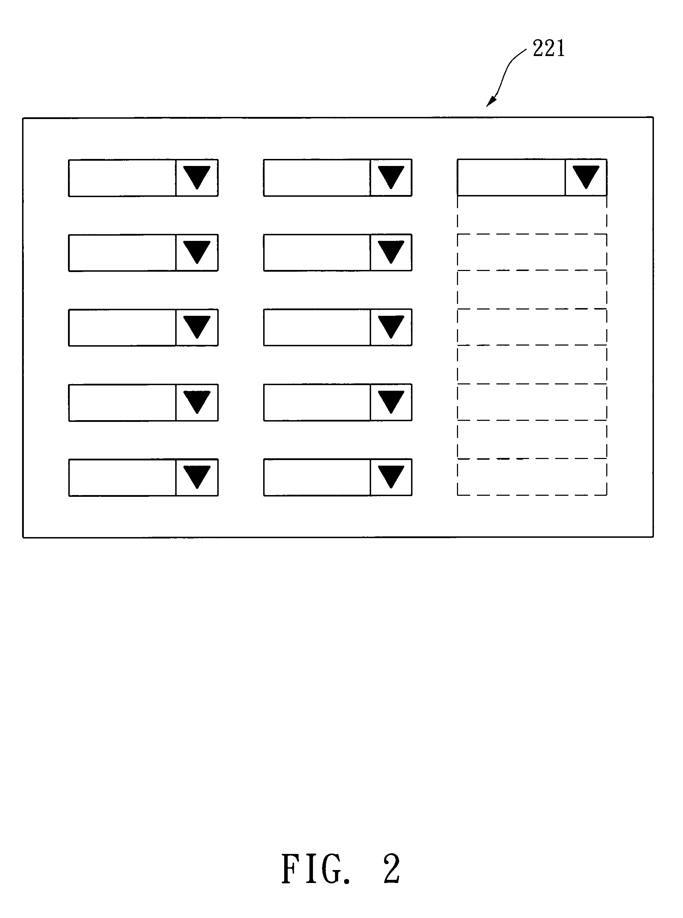

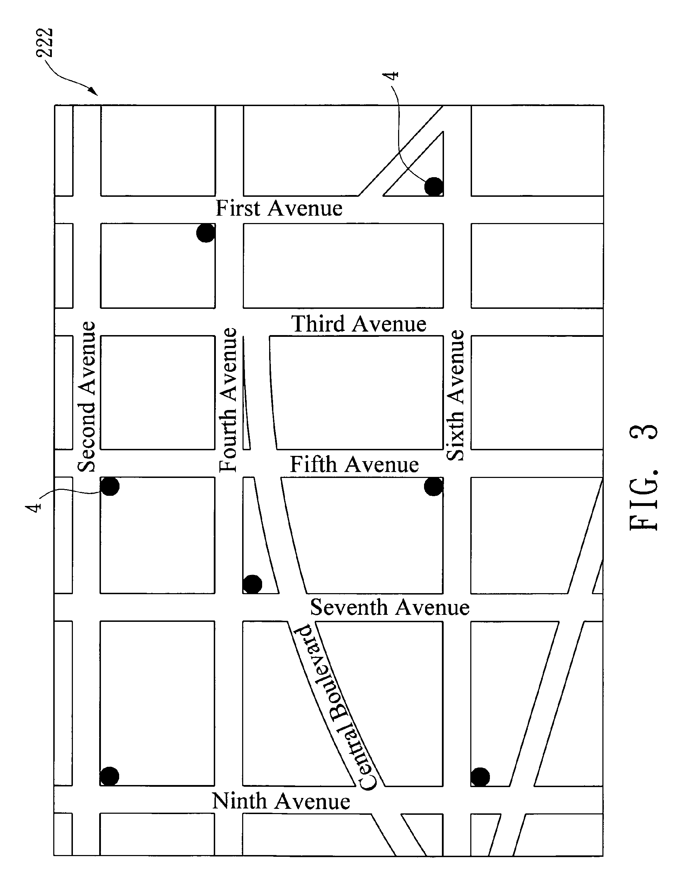

The advertising owner 1 selects the advertising device 41 and at least one advertising playing time at the advertising site 4 according to the obtained advertising performance information and the actual requirement and uploads and stores a desired advertising content in the database 21 via the Internet 5, and the server 2 assigns a URL to the uploaded advertising content, wherein the operating interface 22 is in a pull-down menu mode as shown in FIG. 2 or a pull-down function list 221, or the operating interface 22 is in an map display mode 222 as shown in FIG. 3, and the black dot in the figure indicates the advertising site 4 simply for the illustration of the invention without any particular limitation or effect.

In this embodiment, the advertising performance information further includes a hot time zone and a corresponding advertising fee calculation method provided for the advertising owner 1 to evaluate whether or not the hot time zone meets the requirement, after the statistics of each advertising device 41 are calculated repeatedly and analyzed by the analysis module 23.

The middle server 3 receives the ID code of the advertising device 4 transmitted from the server 2 via the Internet 5, the data including the advertising playing time and the advertising content selected by the advertising owner 1 are assigned to the URL. After the ID code of the advertising device 41 is verified, the data of the selected advertising playing time and URL are transmitted to the selected advertising device 41 and stored in an information buffer unit of the advertising device 41.

The advertising device 41 actively connects the URL received by the middle server 3 to the database 21 when the advertising playing time ends, and instantly plays the advertising content. The advertising device 41 further includes a view counter 42 for determining the viewing situation and recording the information such as the viewer count data which is the number of persons viewing or browsing the advertising content, and the advertising device 41 transmits the viewer count data of the advertising content to the middle server first and then to the server 2. After the analysis module 23 analyzes the data, the advertising performance information corresponding to the advertising device 41 of each advertising site 4 is updated and stored in the database 21.

In this embodiment, the advertising playing time and the URL information selected by the advertising device 41 with the ID code are packeted into a first script file, and the first script file is transmitted to the middle server 3 first and then to the advertising device 41. Of course, the first script file can further include other required information for carrying out the advertising procedure. The viewer count data of the advertising content is packeted into a second script file, and the second script file is transmitted through the middle server 3 to the server 2. Of course, the second script file can further include related information after the advertising is played and provided for the analysis module 23 to perform the analysis procedure.

In this embodiment, the data including the number of persons and other information transmitted from the advertising device 41 are returned to the server 2, and the performance analysis is performed by the analysis module 23, and the performance analysis information is transmitted to the advertising owner 1 owning the advertising content, wherein the performance analysis information is transmitted by email, mobile phone short message, instant messaging and logging on a website at the server 2 for the display.

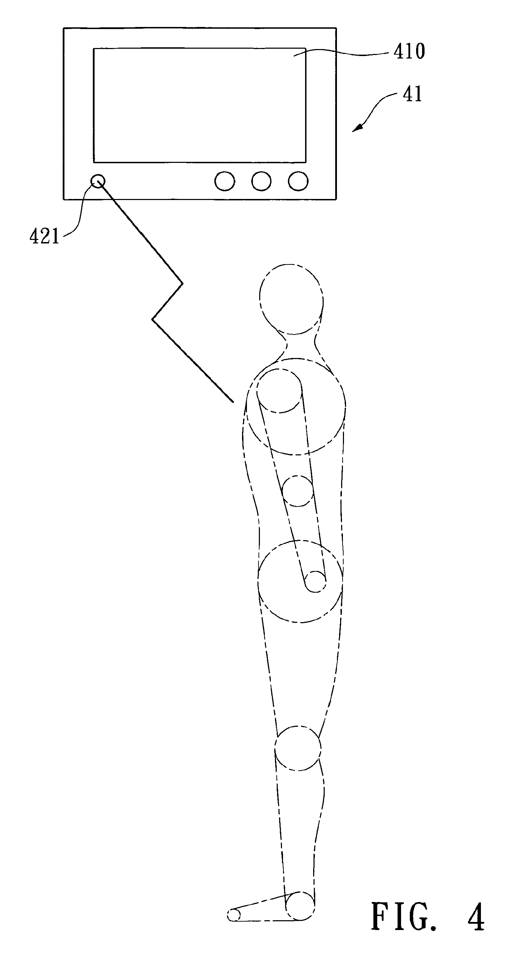

With reference to FIG. 4 for a preferred embodiment of the present invention, the view counter 42 is an infrared thermal sensing unit 421 for detecting a viewer who views the advertising content for more than a predetermined time by an infrared thermal sensing technology in order to count the number of man-time, and the predetermined time can be set to 5∼7 seconds, and such viewer will be counted if the viewer stays longer than the predetermined time.

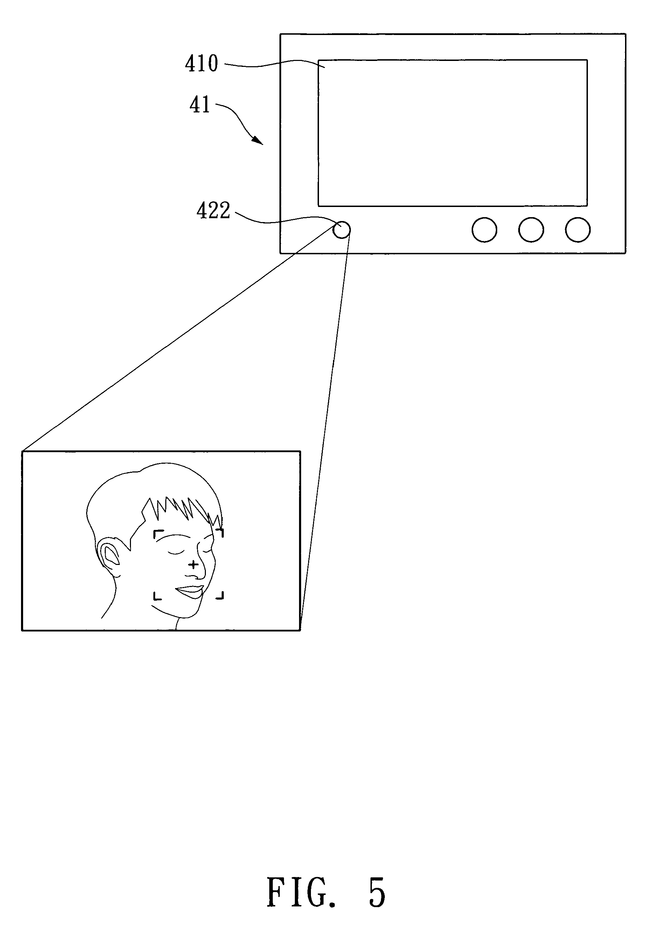

In FIG. 5, the view counter 42 is a face recognition unit 422 for taking the picture of a human face. If a predetermined sampling standard is satisfied, then the number of count will be incremented. The face recognition unit 422 includes an recognition software and a lens set (not shown in the figure) used together with the recognition software.

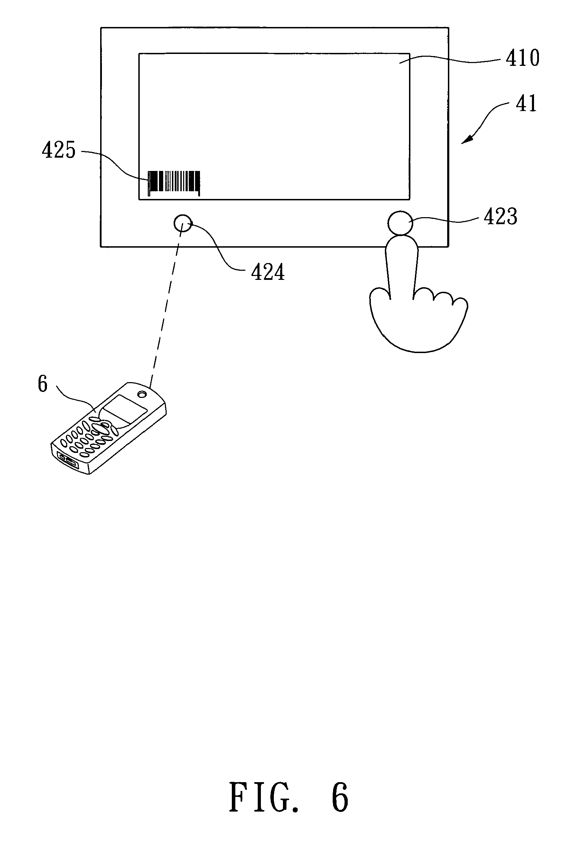

In FIG. 6, the view counter 42 is a press detection unit provided for viewers of the advertising content to press a trigger unit 423 such as a button installed on the advertising device 41. If the trigger unit 423 is pressed, the number of man-time will be incremented, and a data transmission interface 424 such as an infrared device, a Bluetooth device, a wireless network device or a 3.5G mobile communication system installed on the advertising device 41 will be enabled to connect at least one mobile device 6 (such as a personal digital assistant (PDA), a mobile phone, a notebook computer and a global positioning system (GPS) device, and this embodiment adopts mobile phone as shown in FIG. 6) carried by the viewer of the advertising content for transmitting signals and downloading a specific advertising content information such as an electronic coupon, a QR-Code pattern 425 or a certified note of an electronic ticket, wherein the QR-Code pattern 425 contained in the mobile device 6 as shown in FIG. 6 can be scanned by a QR-Code scanner (not shown in the figure) for reading data to perform related commercial transactions.

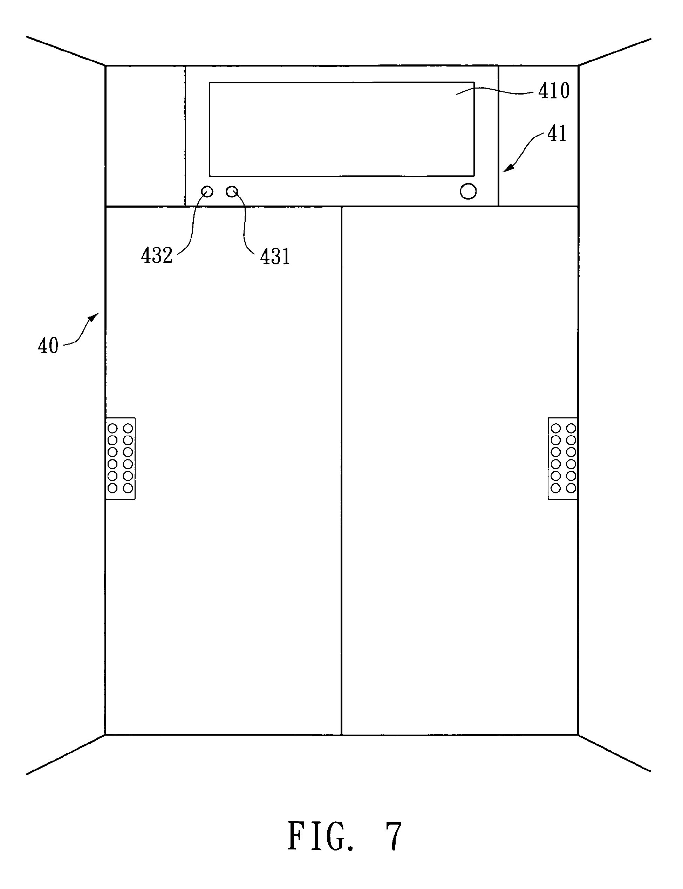

In FIG. 7, if the advertising site 4 is an elevator 40, the advertising device 41 will be installed in the elevator 40, and a sensor 431 for detecting an opened or closed elevator door or a gravity sensor 432 for detecting an up-and-down movement of the elevator is installed on the advertising device 41, such that if the elevator door is opened to allow passengers to enter into the elevator or the elevator is moving up or down, the advertising device 41 will play the advertising content. FIG. 7 shows the situation observed in the elevator.

To classify target customers aimed by the advertising, the advertising owner can set the price or rent of a land or a house of the advertising site as a preliminary condition through the operating interface 22 as a parameter for selecting the advertising site 4, so that the advertising owner can know about the information of a target customer group entering into the advertising site 4 of a particular selling price or rent of the land or a house, and distinguish different consumer groups who enter into such advertising site. In the meantime, the advertising owner can match the target customer group with the advertising content according to the decision of posting the advertising at which advertising site 4, so that the target customer group can be matched with the target of the advertising to achieve a better advertising effect and result in a better commercial benefit. For instance, the advertising owner can post product information of famous brands in a high class residential area or office building. Of course, there are many more other examples, including but not limited to the case that the advertising owner 1 stores the desired advertising content in at least one external database 7 other than the database 21 at the server 2; in other words, the external database 7 is connected to other databases of the Internet 5, and the advertising owner 1 needs to input the corresponding URL of the advertising content in the external database 7 into the server 2, and the server 2 will transmit the information including the ID code of the advertising device and the advertising playing time selected by URL that contains the advertising content to the middle server 3 via the Internet 5, and the middle server 3 transmits the information to the corresponding advertising device 41 via the Internet 5, such that when the advertising playing time ends, the advertising device 41 timely plays the advertising content stored in the external database 7 according to the URL.

In summation of the description above, the multimedia data transmission and feedback system for integrating performance evaluations in accordance with the present invention has the following advantages:
1. The advertising content is pre-stored in the database at the server, and the middle server is provided for connecting the server and the advertising device, so that when the advertising playing time ends, the advertising device is connected to the server, and the instant play is stored in the advertising content of the database, and thus it is necessary to install a high-capacity storage hard disk on each advertising device for storing a high-capacity audio/video file (as in the situation of the prior art), but the invention can overcome the high cost issue of installing a storage hard disk for each advertising device, while maintaining the advantage of the instant play.
2. The invention provides an easy way for advertising owners to post the advertising on the Internet, and allows advertising owners to evaluate the advertising performance in advance and prevent unnecessary advertising expenditure, before the advertising actually takes place.
3. After the advertising content is played, related information such as the data of the number of persons is connected and transmitted to the middle server first and then returned to the server. After the information is analyzed by the analysis module, the performance analysis information can be obtained quickly after the advertising content is played, so that the advertising owner can know about the advertising performance quickly.

## Claims

1. A multimedia data transmission and feedback system for integrating performance evaluations, being a technology of posting an advertising by an advertising owner (1) through the Internet (5), and the system comprising a server (2), a middle server (3) and a plurality of advertising sites (4), and each advertising site (4) comprising an advertising device (41) with an identification (ID) code, and said foregoing components being connected with each other through the Internet (5),
**characterized in that:**
the server (2) comprises an operating interface (22) provided for the advertising owner (1) to operate and input an advertising parameter condition, a database (21) for storing an advertising performance information of each advertising device (41), an analysis module (23) for analyzing the advertising parameter condition to obtain the advertising performance information of the advertising device (41) that satisfies the advertising parameter condition, and a fee calculation module (24) for calculating an advertising fee corresponding to the advertising performance information, wherein the advertising owner (1) selects the desired advertising site (4), the advertising device (41) and at least one advertising playing time according to the obtained advertising performance information, and uploads the desired advertising content into the database (21), and the server (2) assigns a URL to the uploaded advertising content;
the middle server (3) receives the ID code of the advertising device (41), the advertising playing time and the URL information transmitted from the server (2), and transmits the selected advertising playing time and URL information to the advertising device (41) according to the ID code of the advertising device (41) ;
the advertising device (41) is connected to the database (21) according to the received URL when the advertising playing time is up, and instantly plays the advertising content, and the advertising device (41) includes a view counter (42) for determining and recording a viewer count data of browsing the advertising content, and the advertising device (41) transmits the viewer count data of browsing the advertising content to the middle server (3) and then to the server (2), and updates the advertising performance information of the advertising device (41) at each advertising site (4) and stores the updated advertising performance information into the database (21), after the advertising performance is analyzed by the analysis module (23).

2. The multimedia data transmission and feedback system for integrating performance evaluations of claim 1, wherein the advertising performance information includes a hot time zone and a corresponding advertising fee calculation method after the statistics of each advertising device (41) are calculated.

3. The multimedia data transmission and feedback system for integrating performance evaluations of claim 1, wherein the view counter (42) is an infrared thermal sensing unit (421) for counting the number of the person who stay at the advertising viewer for over a predetermined time.

4. The multimedia data transmission and feedback system for integrating performance evaluations of claim 3, wherein the predetermined time is 5 to 7 seconds.

5. The multimedia data transmission and feedback system for integrating performance evaluations of claim 1, wherein the view counter (42) is a facial recognition unit (422) for counting the number of the person if the recognized human face matches a predetermined sampling standard.

6. The multimedia data transmission and feedback system for integrating performance evaluations of claim 5, wherein the facial recognition unit (422) includes an recognition software and a lens set used together with the recognition software.

7. The multimedia data transmission and feedback system for integrating performance evaluations of claim 1, wherein the view counter (42) is a press detection unit having a trigger unit (423) installed on the advertising device (41) for counting the number of the person when the trigger unit (423) is pressed.

8. The multimedia data transmission and feedback system for integrating performance evaluations of claim 7, wherein the trigger unit (423) is pressed to turn on a data transmission interface (424) on the advertising device (41) for a signal connection with at least one mobile device carried by the advertising viewer for a download of a specific advertising content information.

9. The multimedia data transmission and feedback system for integrating performance evaluations of claim 8, wherein the specific advertising content information is an electronic coupon or a QR-Code pattern (425).

10. The multimedia data transmission and feedback system for integrating performance evaluations of claim 1, wherein advertising owner (1) stores the desired advertising into at least one external database (7) other than the database (21) of the server (2), and inputs the URL of the corresponding external database (7) to the server (2).

11. The multimedia data transmission and feedback system for integrating performance evaluations of claim 1, wherein the advertising site (4) is an office building, a community building, a railway station, a subway station, a road intersection, a hospital, a cinema, an elevator (40), a bus station or any type of public transportation.

12. The multimedia data transmission and feedback system for integrating performance evaluations of claim 1, wherein the advertising device (41) is installed in an elevator (40), and a sensor (431) for detecting an open or shut status of an elevator (40) door or a gravity sensor (432) for detecting an up-and-down movement of the elevation is installed on the advertising device (41) , such that when the elevator (40) door is opened or the elevation moves up or down, the advertising device (41) will play the advertising content.

13. The multimedia data transmission and feedback system for integrating performance evaluations of claim 1, wherein after the viewer count data returned from the advertising device (41) to the server (2) goes through a performance analysis by the analysis module (23), the performance analysis information is transmitted to advertising owner (1) owning the advertising content.

14. The multimedia data transmission and feedback system for integrating performance evaluations of claim 13, wherein the performance analysis information is transmitted by a method selected from the collection of email, mobile phone short message, instant messaging and logging on a website at the server (2) for a display.

15. The multimedia data transmission and feedback system for integrating performance evaluations of claim 1, wherein the advertising device (41) further comprises a display unit (410), an information processing unit, an information buffer unit and a network interface unit.

16. The multimedia data transmission and feedback system for integrating performance evaluations of claim 1, wherein the operating interface (22) is a pull-down menu mode (221) or an map display mode (222).

17. The multimedia data transmission and feedback system for integrating performance evaluations of claim 1, wherein the advertising playing time and the URL information selected by the advertising device (41) with the ID code is packeted into a first script file, and the first script file is transmitted to the middle server (3) first and then to the advertising device (41).

18. The multimedia data transmission and feedback system for integrating performance evaluations of claim 1, wherein the viewer count data of browsing the advertising content is packeted into a second script file, and the second script file is transmitted to the middle server (3) first and then to the server (2).
